# EUROPÄISCHE PATENTSCHRIFT

(11) **EP 2 646 234 B1**
(45) Veröffentlichungstag und Bekanntmachung des Hinweises auf die Patenterteilung: **07.03.2018**
(21) Anmeldenummer: 11808339.3
(22) Anmeldetag: 01.12.2011
(51) Int. Cl.: B29L 9/00, B29B 17/04, B29B 17/02, B02C 13/18

(54) **VORRICHTUNG UND VERFAHREN ZUM AUFTRENNEN VON VERBUNDWERKSTOFFEN**
DEVICE AND METHOD FOR SEPARATING COMPOSITE MATERIALS
DISPOSITIF ET PROCEDE DE SÉPARATION DE MATÉRIAUX COMPOSITES

(30) Priorität: 01.12.2010 CH 20272010
(43) Veröffentlichungstag der Anmeldung: 09.10.2013
(73) Patentinhaber: Ascore Technologies AG, 8212 Neuhausen am Rheinfall (CH)
(72) Erfinder: MUTHER, Christoph, CH-6052 Hergiswil (CH)
(74) Vertreter: Spierenburg, Pieter
(86) Internationale Anmeldenummer: PCT/IB2011/055408
(87) Internationale Veröffentlichungsnummer: WO 2012/073216

(56) Entgegenhaltungen:
- EP-A1- 2 251 084
- WO-A1-2006/117065
- DE-A1- 10 319 786
- DE-A1-102004 001 305
- GB-A- 2 030 482

## Beschreibung

Die Erfindung betrifft eine Vorrichtung zum Auftrennen von Verbundwerkstoffen nach dem Oberbegriff des Patentanspruchs 1.

### STAND DER TECHNIK

Verbundwerkstoffe und deren Gemische werden sehr häufig z.B. als Verpackung oder als konstruktives Element im Bau und im Maschinenbau eingesetzt. Dabei werden die physikalischen Eigenschaften von verschiedenen Werkstoffen und Materialien kombiniert, um die gewünschten mechanischen Funktionen zu erfüllen. Ein weiterer Grund für den zunehmenden Einsatz von Verbundwerkstoffen ist, dass diese mit einem geringeren Material- und Energieaufwand hergestellt und somit Ressourcen geschont werden können.

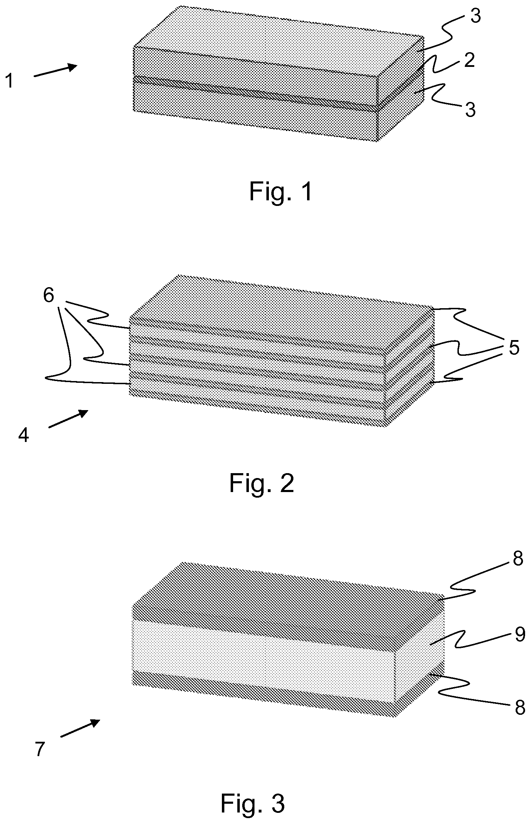

Verschiedene Beispiele von solchen Verbundwerkstoffen werden nun anhand der nachfolgenden Figuren 1 bis 3 beschrieben.

In Figur 1 ist ein Verbundwerkwerkstoff 1 aus einer dünnen Aluminium-Schicht 2 von 20 bis 40 µm in Sandwich mit zwei Schichten 3 aus LDPE (low density polyethylen) von 120 µm, welche als Laminat für Tuben verwendet wird. Das Aluminium dient als Sperrschicht gegen Licht und verhindert die Diffusion von Flüssigkeiten und Gasen.

In Figur 2 ist das Muster einer Leiterplatte 4 für elektronische Schaltungen dargestellt, die aus einem Verbund von dünnen Kupfer-Schichten 5 von 20 µm und Glasfaserepoxid-Schichten 6 von 50 µm und grösser besteht.

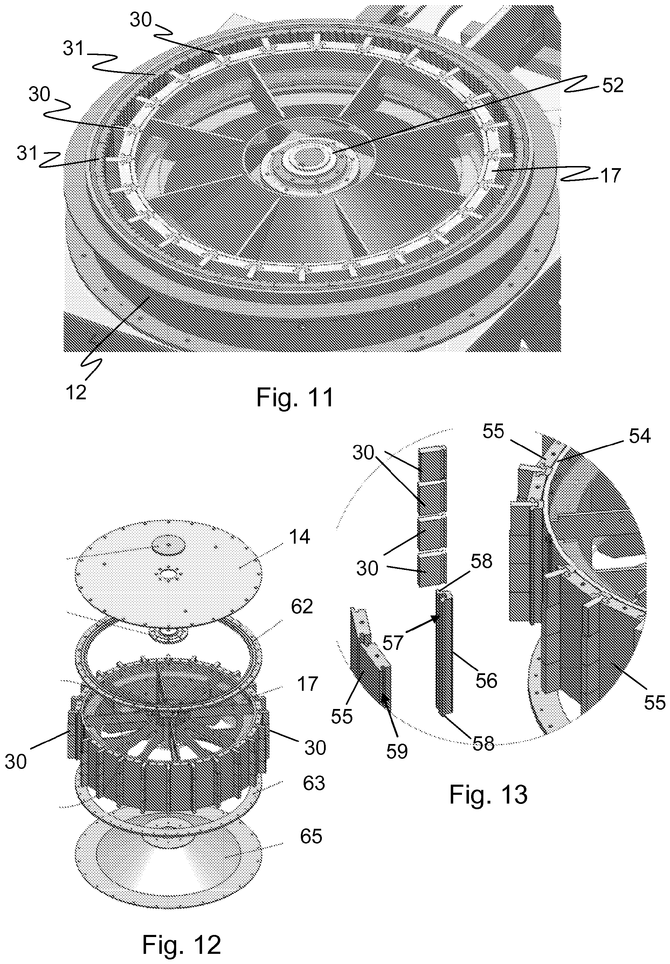

In Figur 3 ist ein Ausschnitt einer Aluminiumverbundplatte 7 dargestellt, die aus zwei Aluminium Schichten 8 von 200 bis 500 µm und einer dazwischenliegenden Schicht 9 aus HDPE (high density polyethylen) von etwa 2 bis 4 mm besteht. Es können auch andere Kunststoffe dazu verwendet werden. Solche Sandwichplatten werden im Fassadenbau oder im Fahrzeugbau eingesetzt.
Solche Verbundwerkstoffe bieten bei der Entsorgung grosse Probleme, da eine präzise Auftrennung der einzelnen Materialien kaum möglich ist. Die Verbundwerkstoffe werden in seltenen Fällen mittels thermischer oder nasschemischer Prozesse verarbeitet. Diese Prozesse sind meistens nicht sehr effizient und belasten die Umwelt in erheblichem Masse. Zudem werden die recycelten Werkstoffe vielfach in ungenügender Qualität hergestellt. Eine andere Möglichkeit besteht darin, die Verbundwerkstoffe zu zerkleinern und eine mechanische Auftrennung der Werkstoffe.
Beispielsweise ist aus WO-A-2006/117065 eine Vorrichtung zum Behandeln von Verbundelementen bekannt, bei welchem der Verbundwerkstoff zu einer Korngrösse von 5 bis 50 mm zerkleinert worden ist und die zerkleinerten Partikel in einen Zufuhrkanal einer Aufschliessvorrichtung geleitet werden. Die Vorrichtung besteht aus einem drehenden Rotor mit als Leisten ausgebildeten Werkzeuge, welcher in einem zylindrischen Stator angeordnet ist. Ein Luftstrom wird in Gegenrichtung in den Ringraum zwischen Rotor und Stator von unten nach oben geleitet, um Staub über ein oben angebrachtes Entstaubungsrohr auszutragen. Beim Aufschliessen der Partikel werden diese beim Aufprall auf die leistenförmigen Werkzeuge weiter zerkleinert wie in Zusammenhang mit Figur 13 näher beschrieben ist. Der Luftstrom ist einerseits notwendig um die Partikel genügend lange im Ringraum zu halten und anderseits um den dabei entstehenden Staub nach oben abzuführen.
Durch den Luftstrom von unten nach oben verbleiben die aufgeschlossenen Partikel länger in den Ringraum als für die Auftrennung notwendig ist. Leichtere und schwerere Partikel haben dadurch auch eine etwa gleich lange Verweilzeit in diesem Ringraum. Ferner besteht die Gefahr, dass die leichteren Partikel mit dem Luftstrom nach oben abgezogen werden, was zu weiteren Komplikationen führt.

Das Dokument DE 10 2004 001 305 A1 offenbart eine Vorrichtung zum Auftrennen von Verbundwerkstoffen mit einem zylindrischen Rotor, welcher eine von einem Motor angetriebene vertikale Drehachse und regelmässig über den Umfang verteilte, parallel zur vertikalen Drehachse vom Rotor abstehende leistenförmige erste Schlagwerkzeuge aufweist, und mit einem den Rotor umgebenden zylindrischen Stator, wobei ein Ringraum zwischen Rotor und Stator gebildet ist, mit einem in den Ringraum mündenden Zufuhrkanal und einem aus dem Ringraum wegführenden Abfuhrkanal, um einen Strom durch den Ringraum zu leiten, wobei ein Deckel vorgesehen ist.

### AUFGABE DER ERFINDUNG

Der vorliegenden Erfindung liegt die Aufgabe zugrunde, eine Vorrichtung zum Auftrennen von Verbundwerkstoffen anzugeben, wobei die Bestandteile mit einer grossen Präzision voneinander entfernt werden und kein Staub dabei entsteht.

### GEGENSTAND DER ERFINDUNG

Diese Aufgabe wird durch eine Vorrichtung zum Auftrennen von Verbundwerkstoffen mit den Merkmalen des Patentanspruchs 1 gelöst.
Die erfindungsgemässe Vorrichtung hat den grossen Vorteil, dass die zu behandelnden Partikel beim Trennungsverfahren nicht weiter zerkleinert oder sogar pulverisiert werden und somit eine Entstaubung vollends entfällt.

### BESCHREIBUNG EINES AUSFÜHRUNGSBEISPIELES DER ERFINDUNG

Weitere Vorteile der Erfindung ergeben sich aus den abhängigen Patentansprüchen und aus der nachfolgenden Beschreibung, in welcher die Erfindung anhand eines in den schematischen Zeichnungen dargestellten Ausführungsbeispieles näher erläutert wird. Es zeigt:
- Fig. 4: eine perspektivische Darstellung einer Vorrichtung zum Auftrennen von Verbundwerkststoffen,
- Fig. 5: eine Draufsicht der Vorrichtung,
- Fig. 6: einen Querschnitt in Längsrichtung durch die Vorrichtung,
- Fig. 7: einen Grundriss der Vorrichtung,
- Fig. 8: eine schematische Darstellung eines Verbundwerkstoffes und die darin erzeugten Schockwellen,
- Fig. 9: eine schematische Draufsicht auf einen Teil des Rotors und einen Teil des Stators,
- Fig. 10: eine schematische Darstellung der Vorrichtung zur Verdeutlichung deren Funktion,
- Fig. 11: den Rotor und den Stator in perspektivischer Darstellung,
- Fig. 12: den Rotor in Explosionsansicht,
- Fig. 13: eine Detaildarstellung aus der Figur 12, und
- Fig. 14: ein Flussdiagramm des Verfahrens zum Auftrennen.

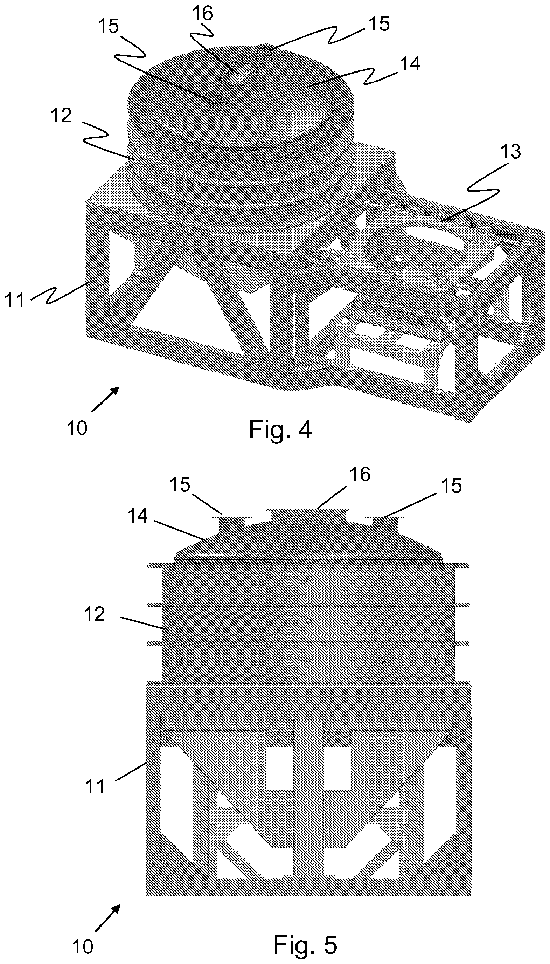

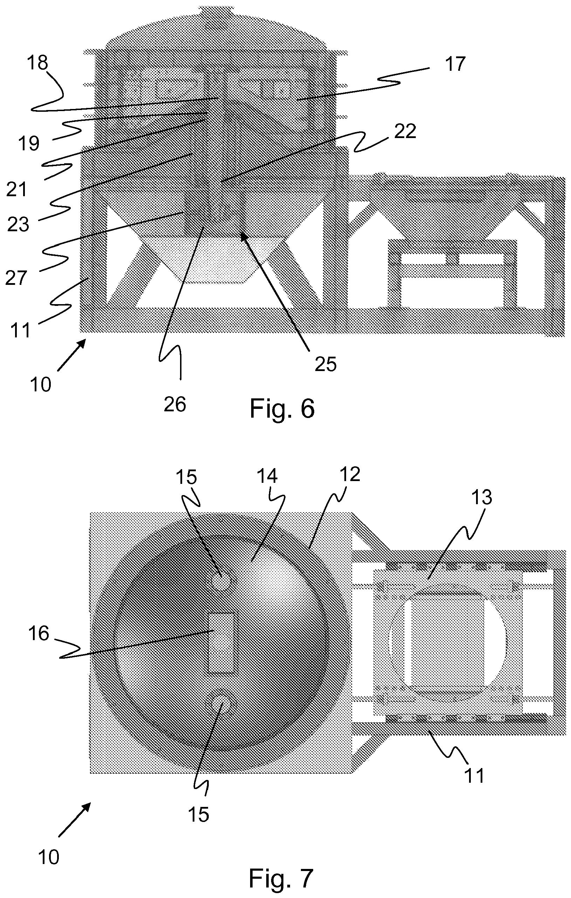

In den Figuren 4 bis 7 ist eine Vorrichtung 10 zum Auftrennen von Verbundwerkstoffen gezeigt, der ein Maschinengestell 11 aufweist, das einen zylindrischen Stator 12 trägt und eine Aufnahme 13 für einen - nicht-dargestellten - Antriebsmotor aufweist. Oben am Deckel 14 der Vorrichtung 10 sind zwei Lufteintrittsöffnungen 15 und eine Materialzufuhröffnung 16 vorgesehen. Wie aus Figur 6 ersichtlich ist ein Rotor 17 drehbar auf einer Welle 18 im Stator 12 angeordnet. Die Welle 18 hat auf etwa zweidrittel Höhe einen Stützring 19, auf welchem der Rotor 17 abgestützt ist. Der Rotor 17 ist mit einem Presssitz auf der Welle 18 befestigt. Ferner sind zwei Lager 21 und 22 in einer Buchse 23 am Maschinengestell 11 vorgesehen, in welchen die Welle 18 drehbar gelagert ist. Die Welle 18 weist auf an ihrem unteren Ende 25 einen Antriebszylinder 26 mit äusseren Rillen 27 auf, um mittels eines nicht-dargestellten Zahnriemens vom Motor angetrieben zu werden.

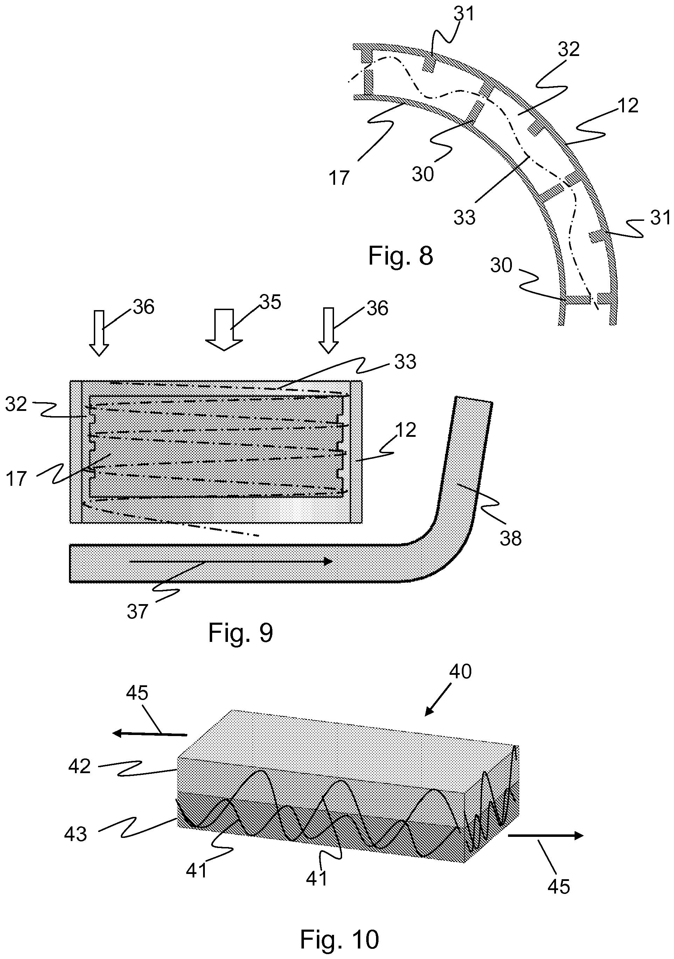

In Figur 8 ist einen Teil des Rotors 17 und einen Teil des Stators 12 dargestellt. Der Rotor 17 weist dabei auf seinem Umfang regelmässig angeordnete erste Werkzeuge 30 auf, welche als Leisten ausgebildet sind und eine Höhe von etwa 10 bis 15 mm haben. Der Stator 12 weist ebenfalls auf seinem Umfang regelmässig angeordnete leistenförmige zweite Werkzeuge 31 auf, welche eine Höhe von etwa 5 bis 8 mm aufweisen. Die zweiten Werkzeuge 31 sind in einem Verhältnis 2:1 innen auf dem Umfang des Stators 12 verteilt. Zwischen dem Stator 12 und dem Rotor 17 ist ein Ringraum 32 gebildet, in welchem sich die Partikel der aufzuschliessenden Verbundwerksstoffe sich befinden. Gestrichelt ist die Flugbahn 33 eines Partikels eines aufzuschliessenden Verbundwerkstoffes dargestellt. Der Rotor 17 dreht sich im Gegenuhrzeigersinn zum Stator 12.

In Figur 9 sind rein schematisch der Stator 12, der Rotor 17 und die schraubenförmige Flugbahn 33 in dem Ringraum 33 dargestellt. Der Pfeil 35 deutet den Materialzufuhr der aufzuschliessenden Verbundwerkstoffe durch die Materialzufuhröffnung 16 dar und die Pfeile 36 die Luftzufuhr durch die Lufteintrittsöffnungen 15 (siehe Figuren 4 bis 7). Durch die Zufuhr der Verbundwerkstoffe von oben in die Vorrichtung 10 beschreiben die Partikel einen schraubenförmigen Weg 33 von oben nach unten. Die Geschwindigkeit und die Steigung können durch die Drehzahl des Rotors 17 und durch die Luftzufuhr geregelt werden. Nach dem Austritt des aufgeschlossenen Materials wird dieses durch einen Luftstrom 37 in einen Kanal 38 weiterbefördert. Dort wird das in Fraktionen aufgeschlossene Material in bekannter Weise mittels Siebe, Fliessbettseparatoren, Sichter und Koronaseparatoren in die einzelnen Bestandteile ausgeschieden.

In der Praxis wird der Rotor 17 mit einer Drehgeschwindigkeit von beispielsweise 800 U/min angetrieben. Die ersten leistenförmigen Werkzeuge 30 werden dadurch mit einer sehr hohen Geschwindigkeit an den zweiten leistenförmigen Werkzeugen 31 vorbeigeführt und im Augenblick des Vorbeiführens entstehen sehr grosse Kräfte auf die mitgeführten Partikel. Durch diese Kräfte werden die Partikel kurzzeitig sehr stark beschleunigt und anschliessend - wenn die ersten Werkzeuge 30 sich zwischen den zweiten Werkzeugen 31 befinden - durch den raschen Abfall der Kräfte wieder gebremst. Dieser Vorgang wiederholt sich mit einer hohen Frequenz, welche durch den Abstand zwischen den ersten Werkzeugen 30, den Abstand zwischen den zweiten Werkzeugen 31 und die Drehgeschwindigkeit des Rotors 17 bestimmt ist. Die Kräfte wirken nun auf die Schichten des Verbundwerkstoffes unterschiedlich, so dass entlang der Grenze zwischen den verschiedenen Materialien ein Abscheren erfolgt. Man kann dabei sogenannte Schockwellen oder Transversalwellen im Verbundwerkstoff beobachten. Da die Energie aufgrund der unterschiedlichen Materialeigenschaften wie Dichte, Elastizität und Steifigkeit verschieden gedämpft wird, werden die Materialen durch Scherkräfte aufgetrennt. Kunststoffe wirken eher absorbierend und schwingungsdämpfend und Metalle eher schwingungsübertragend. In Figur 10 sind diese Schockwellen 41 in einem Teil 40 eines Verbundwerkstoffes dargestellt, welches aus einer PE-Schicht 42 und einer Aluminiumschicht 43 besteht. Mit den Pfeilen 45 sind die Schubkräfte auf die Schichten 42 und 43 angedeutet.

Die Konstruktion der erfindungsgemässen Vorrichtung mit dem Luftstrom von oben nach unten bewirkt, dass die Verweilzeit der schwereren Partikel in dem Ringraum 33 wesentlich kürzer ist als die Verweilzeit der leichteren Partikel. Beispielsweise kreisen die schwereren Partikel, welche von Aluminiumsteile oder Kupferkabel stammen, in etwa 100 mal spiralförmig im Ringraum 33, während leichtere Partikel, welche von Leiterplatten oder dergleichen stammen, in etwa 200 mal spiralförmig im Ringraum 33. Dadurch können die verschiedenen Bestandteile vom sogenannten Elektroschrott wesentlich besser getrennt werden.

Zur Vorbereitung der aufzutrennenden Verbundwerkstoffe werden diese zerkleinert vor dem Einführen in die Vorrichtung 10. In der Regel wird das Material auf einer Grösse von 5 bis 50 mm zerkleinert. Diese Grösse ist abhängig von jeweiligen Verbundwerkstoff. Sind die Schichten relativ dünn wie bei einem Tubenlaminat (< 20 µm) und die Adhäsionskräfte gross, so wird das Verbundmaterial in der Vorrichtung 10 auf eine Grösse von 5 bis 8 mm zerkleinert. Bei Verbundmaterialien mit einer relativ dicken Schicht (> 200 µm) wie Aluminium und geringen Adhäsionskräften kann eine Zerkleinerung auf 40 bis 50 mm erfolgen. Die Zuführung in die Vorrichtung 10 erfolgt kontinuierlich und dosierbar.

Der Rotor 17 hat einen Durchmesser von 1200 bis 2400 mm, in der Standardversion 2000 mm. Der Innendurchmesser des Stators 12 beträgt zwischen 1250 und 2450 mm, standardmässig 2050 mm. Die Bauhöhe des Rotors 17 ist zwischen 375 und 625 mm, standardmässig 500 mm. Die ersten und zweiten Werkzeuge 30 und 31 sind in der Regel in 3 bis 5 Ebenen jeweils vertikal übereinander angeordnet, standardmässig sind 4 Ebenen vorgesehen. Die totale Anzahl der ersten Werkzeuge 30 des Rotors 17 liegt zwischen 50 und 150, standardmässig 96. Der Abstand zwischen den ersten Werkzeugen 30 des Rotors 17 und den zweiten Werkzeugen 31 des Stators ist zwischen 0,5 und 25 mm einstellbar.

Figur 11 ist eine perspektivische Darstellung des Stators 12 und des Rotors 17 mit den leistenförmigen ersten Werkzeugen 30 und den leistenförmigen zweiten Werkzeugen 31. Wie daraus ersichtlich sind die leistenförmigen zweiten Werkzeugen 31 als vom Statorring 12 gehaltenen Wandabschnitte ausgebildet, welche innenseitig ein Sägezahnmuster mit gezackten Vorsprüngen 51 aufweisen. In diesem Fall besteht ein Verhältnis von 1:8 zwischen ersten Werkzeugen 30 und Vorsprüngen 51 über dem Umfang des Rotors 17. In diesem Fall ist keine Welle vorgesehen, sondern eine Buchse 52 vorgesehen, welche durch Speichen 53 an einem Aussenzylinder 54 befestigt ist. Das Verhältnis zwischen den ersten und zweiten Werkzeugen 30 und 31 liegt vorzugsweise zwischen 1:2 und 1:8.

Figur 12 zeigt den Rotor 17 in Explosionsansicht, wobei in Figur 13 eine Detailansicht gezeigt ist. Am Aussenzylinder 54 sind Wandelemente 55 festgeschraubt mit dazwischen eingeklemmten Führungsschienen 56. Die Führungsschiene 56 weist eine schwalbenschwanzförmige Nut 57 mit vorstehenden Kanten 58 auf, welche in eine Nut 59 der Wandelemente 55 hineinpassen. In die Führungsschiene 56 sind nun vier erste Werkzeuge 30 hineingeschoben, welche an einer Längskante 58 ein ähnliches schwalbenschwanzförmiges Profil 60 aufweist. Oben am Aussenzylinder 54 ist ein oberer Flansch 62 und unten ein unterer Flansch 63 angeschraubt, so dass die ersten Werkzeuge 30 in axialer Richtung fixiert sind. Der Rotor 17 ist ferner vom oberen Deckel 14 und von einer unteren Abdeckung 65 gegen Eindringen von aufgetrennten Werkstoffen geschützt. Es können nun erste Werkzeuge 30 mit einer grösseren Breite vorgesehen sein, um den Abstand zwischen ersten Werkzeugen 30 und zweiten Werkzeugen 31 nach Bedarf zu verringern. Der Austausch von den ersten Werkzeugen 31 ist nun durch die Ausbildung der Führungsschienen 56 besonders leicht zu bewerkstelligen.

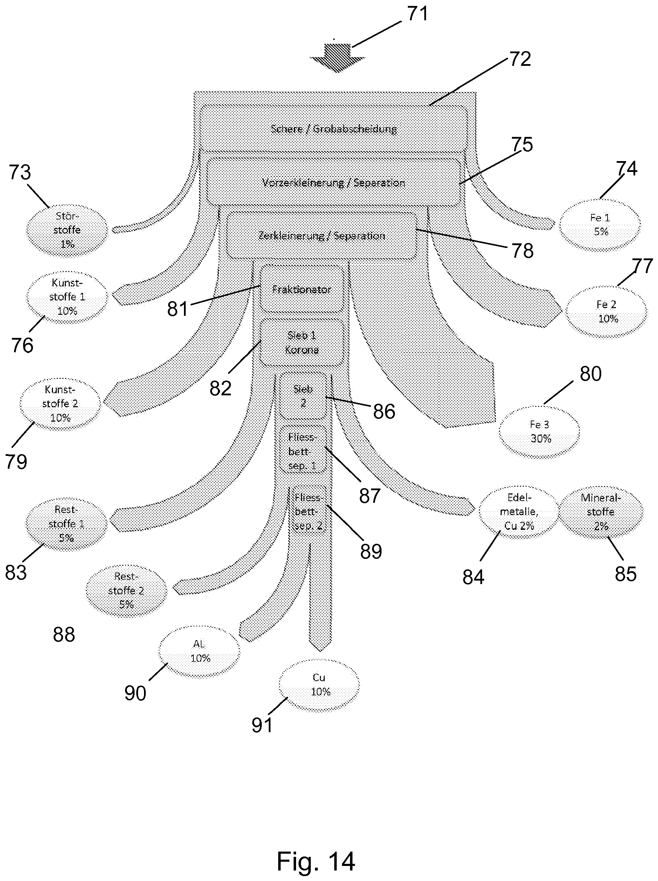

In Figur 14 ist in einem Flussdiagramm der genaue Ablauf bei der Auftrennung von Verbundwerkstoffen wie elektronische Schaltungen genauer dargestellt. Die mit dem Pfeil 71 angegebenen und aufzutrennenden Verbundwerkstoffe werden erst mit einer Schere oder Grobabscheidung 72 von Störstoffen 73 und ersten Eisenteilen 74 befreit. Sodann erfolgt eine Vorzerkleinerung 75, bei welcher erste Kunststoffe 76 und zweite Eisenteile 77 entfernt werden. Anschliessend gibt es eine weitere Zerkleinerung 78, wodurch zweite Kunstoffe 79 und dritte Eisenteile 80 herausgelöst werden. In einem Fraktionator 81, welche hier die Vorrichtung 10 bildet, und einem Koronaseparator und gegebenenfalls einem Sieb 82 werden nun Reststoffe 83, Edelmetalle und Kupfer 84 und Mineralstoffe 85 entfernt. In einem zweiten Sieb 86 und einem ersten Fliessbettseparator 87 werden sodann weitere Reststoffe 88 ausgeschieden. Schlussendlich werden durch einen zweiten Fliessbettseparator 89 Aluminium 90 und Kupfer 91 erhalten.

## Patentansprüche

1. Vorrichtung (10) zum Auftrennen von Verbundwerkstoffen mit einem zylindrischen Rotor (17), welcher eine von einem Motor angetriebene vertikale Drehachse und regelmässig über den Umfang verteilte, parallel zur vertikalen Drehachse vom Rotor abstehende leistenförmige erste Schlagwerkzeuge (30) aufweist, und mit einem den Rotor umgebenden zylindrischen Stator (12), wobei ein Ringraum (32) zwischen Rotor und Stator gebildet ist, mit einem in den Ringraum mündenden Luftzufuhrkanal (15) und einem aus dem Ringraum wegführenden Luftabfuhrkanal (38), um einen Luftstrom durch den Ringraum zu leiten, wobei ein Deckel (14) vorgesehen ist, **dadurch gekennzeichnet, dass** der Deckel (14) zwei Lufteintrittsöffnungen (15) und eine Materialzuführöffnung (16) aufweist, so dass der Luftzufuhrkanal (15) im oberen Bereich des Ringraums (32) mündet und der Luftabfuhrkanal (38) vom unteren Bereich des Ringraums wegführt, um den Luftstrom von oben nach unten zu führen, und dass die zylindrische Wandung des Stators (12) regelmässig über den Umfang verteilte, radial nach innen vorstehende leistenförmige zweite Schlagwerkzeuge (31) aufweist.

2. Vorrichtung nach Anspruch 1, **dadurch gekennzeichnet, dass** die ersten Schlagwerkzeuge (30) im Verhältnis von 1: 2 bis 1:8 zu den zweiten Schlagwerkzeugen (31) über den Umfang des Rotors (17) bzw. des Stators (12) verteilt sind.

3. Vorrichtung nach Anspruch 1 oder 2, **dadurch gekennzeichnet, dass** die Breite der ersten Schlagwerkzeuge (30) doppelt bis dreifach so hoch ist als die Breite der zweiten Schlagwerkzeuge (31).

4. Vorrichtung nach einem der Ansprüche 1 bis 3, **dadurch gekennzeichnet, dass** der Abstand zwischen den ersten und den zweiten Werkzeugen zwischen 2 und 10 mm, insbesondere zwischen 5 und 8 mm, beträgt.

5. Vorrichtung nach einem der Ansprüche 1 bis 4, **dadurch gekennzeichnet, dass** die ersten Schlagwerkzeuge (31) ein schwalbenförmiges Profil aufweisen und die Schlagwerkzeuge (31) in einer Nut (57) einer Führungsschiene (56) festgehalten sind.

6. Verfahren zum Auftrennen eines Verbundwerkstoffes mit einer Vorrichtung nach einem der Ansprüche 1 bis 5, **dadurch gekennzeichnet, dass** die Teile des Verbundwerkstoffes in kleineren Stücken zerkleinert werden, welche Stücke in den Ringraum (32) zwischen dem Rotor und Stator eingeführt werden, wobei die Stücke durch Druckveränderungen, welche zwischen den ersten Werkzeugen (30) des drehenden Rotors (17) und den zweiten Werkzeugen (31) des Stators (12) entstehen, kurzzeitigen starken Kräften ausgesetzt sind, wodurch die Schichten des Verbundwerkstoffes durch Scherkräfte voneinander abgetrennt werden, und Druckluft von oben in die Vorrichtung eingeleitet wird, mittels welcher die Verweilzeit der Stücke im Ringraum (32) gesteuert wird.

## Claims

1. A device (10) for separating composite materials, comprising a cylindrical rotor (17) which has a vertical rotating shaft driven by a motor, and strip-shaped first impact tools (30) which are evenly distributed over the circumference and which protrude from the rotor parallel to the vertical rotating shaft, and comprising a cylindrical stator (12) that surrounds the rotor, wherein an annular space (32) is formed between the rotor and the stator, and comprising an air supply channel (15) opening into the annular space and an air removal channel (38) leading out of the annular space to guide an air stream through the annular space, wherein a cover (14) is provided, **characterized in that** the cover (14) has two air inlet openings (15) and a material feed opening (16), so that the air supply channel (15) opens into the upper region of the annular space (32) and the air removal channel (38) leads away from the lower region of the annular space in order to guide the airflow from the top downwards, and that the cylindrical wall of the stator (12) has strip-shaped second impact tools (31) which are distributed over the circumference and which project radially inwardly.

2. A device according to claim 1, **characterized in that** the first impact tools (30) are distributed over the circumference of the rotor (17) or of the stator (12) in the ratio of 1:2 to 1:8 relative to the second impact tools (31).

3. A device according to claim 1 or 2, **characterized in that** the width of the first impact tools (30) is twice to three times the width of the second impact tools (31).

4. A device according to one of the claims 1 to 3, **characterized in that** the distance between the first and the second tools is between 2 and 10 mm, in particular between 5 and 8 mm.

5. A device according to one of the claims 1 to 4, **characterized in that** the first impact tools (31) have a dovetail-shaped profile and the impact tools (31) are held in a groove (57) of a guide rail (56).

6. A method for separating a composite material, comprising a device according to one of the claims 1 to 5, **characterized in that** the parts of the composite material are crushed into smaller pieces, which pieces are introduced into the annular space (32) between the rotor and stator, wherein the pieces are subject to short-term strong forces by pressure changes which are produced between the first tools (30) of the rotating rotor (17) and the second tools (31) of the stator (12), thereby separating the layers of the composite material from each other by shearing forces, and compressed air from above is introduced into the device, by means of which the dwell time of the pieces in the annular space (32) is controlled.

## Revendications

1. Dispositif (10) pour séparer des matériaux composites avec un rotor cylindrique (17) qui présente un axe de rotation vertical entraîné par un moteur et des premiers outils de battage (30) en forme de bandes répartis régulièrement sur la circonférence et dépassant parallèlement à l'axe de rotation vertical du rotor, et avec un stator cylindrique (12) entourant le rotor, un espace annulaire (32) étant formé entre le rotor et le stator, avec un canal d'arrivée d'air (15) qui débouche dans l'espace annulaire et un canal d'évacuation de l'air (38) menant hors de l'espace annulaire pour conduire un flux d'air à travers l'espace annulaire, dans lequel un couvercle (14) est prévu, **caractérisé en ce que** le couvercle (14) présente deux ouvertures d'entrée d'air (15) et une ouverture d'arrivée de matériau (16), de sorte que le canal d'arrivée d'air (15) débouche dans la partie supérieure de l'espace annulaire (32) et le canal d'évacuation de l'air (38) part de la partie inférieure de l'espace annulaire pour guider le flux d'air de haut en bas, et **en ce que** la paroi cylindrique du stator (12) présente des deuxièmes outils de battage (31) en forme de bandes répartis régulièrement sur la circonférence et dépassant vers l'intérieur dans le sens radial.

2. Dispositif selon la revendication 1, **caractérisé en ce que** les premiers outils de battage (30) sont répartis sur la circonférence du rotor (17) dans une proportion de 1 pour 2 à 1 pour 8 par rapport aux deuxièmes outils de battage (31) sur la circonférence du stator (12).

3. Dispositif selon la revendication 1 ou 2, **caractérisé en ce que** la largeur des premiers outils de battage (30) est deux à trois fois plus grande que celle des deuxièmes outils de battage (31).

4. Dispositif selon l'une des revendications 1 à 3, **caractérisé en ce que** la distance entre les premiers et deuxièmes outils est comprise entre 2 et 10 mm, en particulier entre 5 et 8 mm.

5. Dispositif selon l'une des revendications 1 à 4, **caractérisé en ce que** les premiers outils de battage (31) présentent un profil en queue d'aronde et les outils de battage (31) sont retenus dans une gorge (57) d'un rail de guidage (56).

6. Procédé pour séparer un matériau composite avec un dispositif selon l'une des revendications 1 à 5, **caractérisé en ce que** les parties du matériau composite sont fragmentées en petits morceaux, lesquels morceaux sont introduits dans l'espace annulaire (32) entre le rotor et le stator et exposés pendant une courte durée à des forces importantes en raison des changements de pression qui se produisent entre les premiers outils (30) du rotor (17) en rotation et les deuxièmes outils (31) du stator (12), de sorte que les couches du matériaux composite sont séparées les unes des autres par des forces de cisaillement, et de l'air comprimé, au moyen duquel le temps de séjour des morceaux dans l'espace annulaire (32) est contrôlé, est amené par le haut dans le dispositif.
